# EUROPÄISCHE PATENTSCHRIFT

(11) **EP 1 802 418 B1**
(45) Veröffentlichungstag und Bekanntmachung des Hinweises auf die Patenterteilung: **14.04.2010**
(21) Anmeldenummer: 05794441.5
(22) Anmeldetag: 19.10.2005
(51) Int. Cl.: B23K 11/31, B23K 11/25

(54) **PUNKTSCHWEISSZANGE UND VERFAHREN ZUM EINSTELLEN DES DRUCKES EINER PUNKTSCHWEISSZANGE**
SPOT WELDING ROD AND METHOD FOR ADJUSTING THE PRESSURE OF A SPOT WELDING ROD
PINCE A SOUDER PAR POINTS ET PROCEDE POUR REGLER LA PRESSION D'UNE PINCE A SOUDER PAR POINTS

(30) Priorität: 19.10.2004 AT 17532004
(43) Veröffentlichungstag der Anmeldung: 04.07.2007
(73) Patentinhaber: Fronius International GmbH, 4643 Pettenbach (AT)
(72) Erfinder: BINDER, Manuel, A-4720 Kallham (AT); STIEGLBAUER, Walter, A-4901 Manning (AT); WEIGERSTORFER, Günter, A-4621 Sipbachzell (AT)
(74) Vertreter: Sonn & Partner Patentanwälte
(86) Internationale Anmeldenummer: PCT/AT2005/000415
(87) Internationale Veröffentlichungsnummer: WO 2006/042354

(56) Entgegenhaltungen:
- EP-A- 1 380 378
- PATENT ABSTRACTS OF JAPAN Bd. 1998, Nr. 01, 30. Januar 1998 (1998-01-30) & JP 09 248678 A (NISSAN MOTOR CO LTD), 22. September 1997 (1997-09-22) in der Anmeldung erwähnt
- PATENT ABSTRACTS OF JAPAN Bd. 1998, Nr. 05, 30. April 1998 (1998-04-30) & JP 10 026204 A (FANUC LTD), 27. Januar 1998 (1998-01-27)

## Beschreibung

Die Erfindung betrifft eine Punktschweißzange zum Widerstandsschweißen von Werkstücken, insbesondere Blechen, mit einem Antrieb zur Bewegung der Zangenarme, welcher Antrieb aus einem Stirnrad und einem außerhalb dessen Mittelachse über eine Lageranordnung damit verbundenen Pleuel gebildet ist, wobei das Stirnrad an einem Zangenarm und das Pleuel an der gegenüberliegenden Seite des Stirnrades mit dem weiteren Zangenarm verbunden ist und wobei die Lageranordnung während des Arbeitsvorganges eine kurvenförmige Bewegung durchführt.

Weiters betrifft die Erfindung ein Verfahren zum Einstellen des Druckes einer Punktschweißzange, wobei zumindest eine Elektrode eines Zangenarmes in Richtung der zu verbindenden Werkstücke bewegt wird, wobei der Antrieb über ein Stirnrad und ein daran gelagertes Pleuel den Zangenarm mit der Elektrode betätigt und nach dem Kontaktieren der Elektrode mit den Werkstücken durch weiteres Betätigendes Antriebs ein Druck auf die Werkstücke über den Zangenarm und der daran angeordneten Elektrode aufgebaut wird, wobei über einen Sensor dieser Druck ermittelt wird und die Daten des Sensors an eine Steuervorrichtung übermittelt werden, wobei bei Erreichen eines vorbestimmten Druckwertes der Antrieb durch die Steuervorrichtung so geregelt wird, dass der Druck aufrecht erhalten wird, worauf die Punktschweißung durchgeführt wird und nach der Punktschweißung die Elektrode zurückbewegt wird.

Die Erfindung bezieht sich insbesondere auf Punktschweißzangen, wie sie für Roboteranwendungen eingesetzt werden.

Aus der JP 8025057, sowie der EP 761 367 B1 ist ein Antrieb für Punktschweißzangen bekannt, bei welchem die Zangenarme der Punktschweißzange mittels eines so genannten Kurbeltriebs geöffnet und geschlossen werden. Dabei ist ein Zangenarm direkt an einem Kurbelrad befestigt, welches von einem Motor mittels Keilriemen angetrieben wird. Der weitere Zangenarm ist unbeweglich, also starr an eine Halterung angeordnet. Wird nun das Kurbelrad vom Motor angetrieben, führt der am Kurbelrad angeordnete Zangenarm eine Öffnungs- und Schließbewegung durch, wodurch sich die am Zangenarm angeordneten Elektroden zueinander bewegen oder voneinander entfernen. Dabei kommt es zu keiner Kompensation der unterschiedlichen möglichen Bauteildicken, weshalb es notwendig ist, den Antriebsmotor derart großzügig zu dimensionieren, dass dieser auch bei maximal verschweißbarer Bauteildicke genügend Kraftreserven beinhaltet, um einen voreingestellten Kraftwert auch erreichen zu können.

Die JP 9248678 A und die EP 1 078 708 A zeigen Punktschweißzangen mit einem Antrieb, welcher aus einem Rad und einem damit verbundenen Pleuel gebildet ist. Das Rad ist an einem Zangenarm und das Pleuel an der gegenüberliegenden Seite mit dem weiteren Zangenarm verbunden und das Pleuel außerhalb der Mitte des Rades über eine Lageranordnung mit diesem verbunden. Bei unterschiedlichen Werkstücken, insbesondere unterschiedlich dicken Werkstücken ergeben sich dabei jedoch ungleiche Druckverhältnisse während des Punktschweißvorganges.

Die EP 1 380 378 A1 zeigt ein Kraftbegrenzungselement, durch welches beim Schließen der Schweißzange durch falsch positionierte Werkstücke oder Klemmen auftretende Kräfte begrenzt werden können.

Die Aufgabe der vorliegenden Erfindung besteht daher in der Schaffung einer oben genannten Punktschweißzange, welche modular, einfach und kompakt aufgebaut ist, und welche einen Antrieb aufweist, der möglichst geringer Wartung unterliegt und gleichzeitig eine möglichst hohe Anzahl von Arbeitszyklen, also Punktschweißungen, gewährleistet. Nachteile des Standes der Technik sollen vermieden oder zumindest reduziert werden.

Eine weitere Aufgabe der vorliegenden Erfindung besteht in der Schaffung eines oben genannten Verfahrens zum Aufbau eines Druckes einer Punktschweißzange, welche möglichst einfach funktioniert und möglichst geringe Wartung bedarf sowie eine möglichst hohe Anzahl von Arbeitszyklen gewährleistet.

Die erfindungsgemäßen Aufgaben werden durch eine oben genannte Punktschweißzange gelöst, bei der zwischen dem Pleuel und dem Zahngenarm ein Element zur Kompensation unterschiedlicher Dicken der zu verschweißenden Werkstücke angeordnet ist, welches Kompensationselement aus einem Gehäuse mit einer beweglich in einem Lager angeordneten Exzenterwelle und einer Sperrvorrichtung besteht. Durch das erfindungsgemäße aus einem Gehäuse mit einer beweglich in einem Lager angeordneten Exzenterwelle und einer Sperrvorrichtung bestehende Kompensationselement können unterschiedliche Werkstücke mit unterschiedlichem Material und unterschiedlichen Dicken optimal verschweißt werden, indem das Kompensationselement je nach den zu verschweißenden Werkstücken eine optimale Druckeinstellung bewirkt. Weiters wird in vorteilhafter Weise erreicht, dass ein nahezu wartungsfreier Antrieb mit möglichst geringer Reibung geschaffen wird, welcher eine kleine und kompakte Baugröße aufweist. Weiters wird eine wesentlich höhere Anzahl von Arbeitszyklen ohne Tausch von verschleißbehafteten Teilen ermöglicht. Vorteilhaft ist weiters, dass ein Antrieb mit einem optimalen Kraftaufbau geschaffen wird, wodurch lediglich ein kleiner, leichter und leistungsschwacher Motor für den Antrieb benötigt wird und somit wiederum die Baugröße des Antriebs sowie die Kosten wesentlich minimiert sind.

Wenn am Umfang des Stirnrades eine Verzahnung angeordnet ist, in welche ein mit einem Getriebe und/oder einem Motor gekoppeltes Zahnrad eingreift, kann ein das Stirnrad antreibender Motor direkt am Stirnrad bzw. am Umfang des Stirnrades angeordnet und somit eine einfache Übersetzung geschaffen werden. Weiters ist dadurch ein wesentlich leistungsschwächerer Motor notwendig, da sich das Stirnrad umso leichter verdrehen lässt, je weiter der Motor vom Mittelpunkt des Stirnrades entfernt ist. Somit wird eine wesentliche Kostenersparnis des Antriebs und somit der Punktschweißzange erzielt.

Wenn das Kompensationselement an einem Zangenarm angeordnet ist, wird eine optimale und immer gleiche Druckeinstellung, also ein optimaler und gleicher Druckaufbau der Elektroden auf das Werkstück, erreicht. Somit ist in einfacher Art und Weise eine automatische Druckeinstellung ohne notwendige Änderungen durch den Benutzer realisiert.

An den beiden Zangenarmen ist vorteilhafterweise je ein Schwenkarm angeordnet und die Schwenkarme sind an der den Zangenarmen gegenüberliegenden Seiten, beispielsweise über einen Bolzen mit einer Drehachse, miteinander verbunden. Dadurch wird eine Punktschweißzange geschaffen, welche einfach und unkompliziert aufgebaut ist und eine gute Zugänglichkeit zu den Werkstücken ermöglicht. Des Weiteren ist dadurch eine wesentliche Gewichtseinsparung erreicht, wodurch auch die Kosten wesentlich minimiert werden.

Dabei sind die Schwenkarme vorteilhafterweise in einem definierten Abstand zum Antrieb und/oder zu den Elektroden angeordnet.

Das Kompensationselement bzw. ein Gehäuse oder Schilder des Kompensationselements sind gemäß einem weiteren Merkmal der Erfindung starr am Zangenarm angeordnet.

Über die Exzenterwelle erfolgt die Kompensation, indem die Exzenterwelle bis zu einem definierten Punkt verdreht wird und der Druckaufbau erst nach einer Fixierung der Exzenterwelle an diesem Punkt erfolgt. Dadurch wird die Wegkompensation mittels einfacher Mittel realisiert.

Gemäß einem weiteren Merkmal der Erfindung ist vorgesehen, dass am Gehäuse des Kompensationselements eine Sperrvorrichtung angeordnet ist, welche einen zylindrischen Fortsatz aufweist, wobei die Exzenterwelle in eine Durchgangsöffnung des zylindrischen Fortsatzes eingeschoben ist.

Durch die Anordnung eines Befestigungsmittels an der Exzenterwelle, welches die Exzenterwelle mit der Sperrvorrichtung verbindet, kann eine einfache Befestigung erfolgen. Durch das Anordnet eines Rückstellelements am Fortsatz, welches bevorzugt als Feder ausgebildet ist, kann eine definierte Rückstellung auf eine Ausgangsposition der Exzenterwelle in einfacher Art und Weise geschaffen werden. Somit wird vermieden, dass die Exzenterwelle senkrecht auf das an der Exzenterwelle angeordnete Pleuel steht und dadurch keine Wegkompensation ermöglicht wird, da sich die Exzenterwelle durch das alleinige Aufbringen der Schließkraft nicht verdrehen lassen würde.

Gemäß einem weiteren Merkmal der Erfindung ist die Sperrvorrichtung als Magnetbremse ausgebildet. Eine solche Sperrvorrichtung ist besonders schnell in seiner Reaktion, wodurch Verzögerungen und dadurch resultierende Ungenauigkeiten im Druckaufbau auf einfache Art und Weise vermieden werden.

Durch eine manuelle Einstellbarkeit des Kompensationselement, beispielsweise über eine Lochscheibe, kann die Dicke der zu verschweißenden Werkstücke leicht eingestellt werden. Dadurch werden Teile, welche zur automatischen Druckkompensation, wie beispielsweise eine ansteuerbare Sperrvorrichtung, benötigt werden, eingespart und der Antrieb wird dadurch wesentlich günstiger und auch leichter.

Gelöst wird die erfindungsgemäße Aufgabe in verfahrensmäßiger Hinsicht dadurch, dass während der Bewegung der Elektrode in Richtung der Werkstücke über ein zwischen dem Pleuel und dem Zangenarm angeordnetes Kompensationselement eine Druck- bzw. Wegkompensation durchgeführt wird, indem der Sensor eine Position des Stirnrades und/oder Motors ermittelt und bei Erreichen einer definierten Position die bevorzugt nahe eines oberen Totpunktes des Stirnrades liegt, das Kompensationselement gesperrt wird, und somit ein Druckaufbau der Elektrode auf die Werkstücke durchgeführt wird. Vorteilhaft ist hierbei, dass der Druckaufbau der Elektroden auf das Werkstück erst unmittelbar vor dem oberen Totpunkt des Stirnrades, bzw. der Verbindungsstelle des Stirnrades und des Pleuels, erfolgt. Da der Druckaufbau unmittelbar vor dem oberen Totpunkt wesentlich leichter erfolgt, als wenn die Verbindungsstelle sich im rechten Winkel zum oberen Totpunkt befindet, kann ein wesentlich leistungsschwächerer Motor zum Antreiben des Stirnrades verwendet werden. Weiters ist von Vorteil, dass dadurch in einfacher Art und Weise die Baugröße und das Gewicht der Punktschweißzange wesentlich geringer gehalten wird.

Dadurch, dass das Stirnrad und/oder der Motor bei Erreichen eines definierten Druckes der Elektrode auf die Werkstücke diese Position beibehält, kann der Anpressdruck der Elektrode auf die Werkstücke während des Punktschweißprozesses aufrecht erhalten werden.

Gemäß einem weiteren Merkmal der Erfindung erfolgt die Druck bzw. Wegkompensation durch ein mechanisch aufgebautes Kompensationselement, indem bei Erreichen einer mechanisch festlegbaren Position das Kompensationselement für einen weiteren Druckaufbau gesperrt wird. Dadurch wird ein einfacher und kostengünstiger Aufbau des Kompensationselementes erzielt. Auch wird eine erhebliche Gewichtseinsparung bei der Punktschweißzange erreicht.

Vor Beginn des Punktschweißvorganges wird die Punktschweißzange geöffnet und mittels des Sensors die Referenzposition des Stirnrades ermittelt.

Dadurch kann sichergestellt werden, dass bei einer bestimmten Position des Stirnrades und/oder des Motors eine Sperrung des Kompensationselementes zum Druckaufbau erfolgt und/oder ein Überschreiten des oberen Totpunktes verhindert wird. Dadurch wird in einfacher Art und Weise der Antrieb, insbesondere das Stirnrad und/oder der Motor referenziert, d.h., dass eine End- und/oder Referenzposition detektiert wird.

Gemäß einem weiteren Merkmal der Erfindung werden die Elektroden zueinander bewegt, bis sie die Werkstücke kontaktieren. Danach wird das Stirnrad weiterverdreht, jedoch der Druck der Elektroden auf die Werkstücke über das Kompensationselement nicht weiter aufgebaut, indem eine im Kompensationselement gelagerte Exzenterwelle bei Kontakt mit den Werkstücken über eine Achse verdreht wird, bei Erreichen der definierten Position des Stirnrades die Exzenterwelle in ihrer Drehrichtung gesperrt wird, so dass ein weiterer Druckaufbau der Elektroden auf die Werkstücke durchgeführt wird. Dadurch kann in einfacher und kostengünstiger Art und Weise ein automatischer Druckaufbau zu dem gewünschten Zeitpunkt erfolgen, wodurch wiederum ein kleinerer, leistungsschwächerer und somit kostengünstiger Motor und oder Motor-Getriebe-Kombination eingesetzt werden kann und weiters das Gesamtgewicht bzw. die Kosten der Punktschweißzange wesentlich verringert wird.

Vorteilhafterweise wird der aufgebaute Druck durch ein am Pleuel und/oder am Zangenarm angeordnetes Mittel zur Erkennung des Drucks ermittelt.

Dabei kann die Druckermittlung über die Deformierung des Pleuels und/oder des Zangenarms, beispielsweise mit Hilfe eines Dehnungsmessstreifens, erfolgen. In weiterer Folge kann eine Druckkraftregulierung und eine automatische Druckanpassung der Elektroden auf die Werkstücke durchgeführt werden.

Die vorliegende Erfindung wird anhand der beigefügten Zeichnungen näher erläutert.

Darin zeigen:
Fig. 1 eine perspektivische Ansicht einer Punktschweißzange mit einem erfindungsmäßigen Antrieb in Ausgangsposition, schematisch und vereinfacht dargestellt;
Fig. 2 die Punktschweißzange gemäß Fig. 1 in Kontakt mit einem Werkstück;
Fig. 3 die Punktschweißzange gemäß Fig. 1 während einer Wegkompensation, bzw. einer Ausgleichsbewegung, also bei aktiviertem Kompensationselement;
Fig. 4 die Punktschweißzange gemäß Fig. 1 in Arbeitsstellung;
Fig. 5 das erfindungsgemäße Kompensationselement in perspektivischer Ansicht, schematisch und vereinfacht dargestellt;
Fig. 6 eine Schnittdarstellung des Kompensationselementes gemäß Fig. 5;
Fig. 7 eine Schnittdarstellung einer Ausführungsvariante des Kompensationselementes;
Fig. 8 eine Ansicht auf eine Lochscheibe des Kompensationselements;
Fig. 9 eine weitere Ausführungsvariante des Kompensationselementes in perspektivischer Ansicht, schematisch und vereinfacht dargestellt;
Fig. 10 eine Schnittdarstellung des Kompensationselementes gemäß Fig. 9;
Fig. 11 eine schematische, vereinfachte Darstellung des aus Stirnrad und Pleuel bestehenden Antriebs in Arbeitsstellung;
Fig. 12 den Antrieb gemäß Fig. 11 bei Öffnung der Punktschweißzange;
Fig. 13 eine Ausführungsvariante des aus Stirnrad und Pleuel bestehenden Antriebs in Arbeitsstellung; und
Fig. 14 den Antrieb gemäß Fig. 13 bei geöffneter Punktschweißzange.

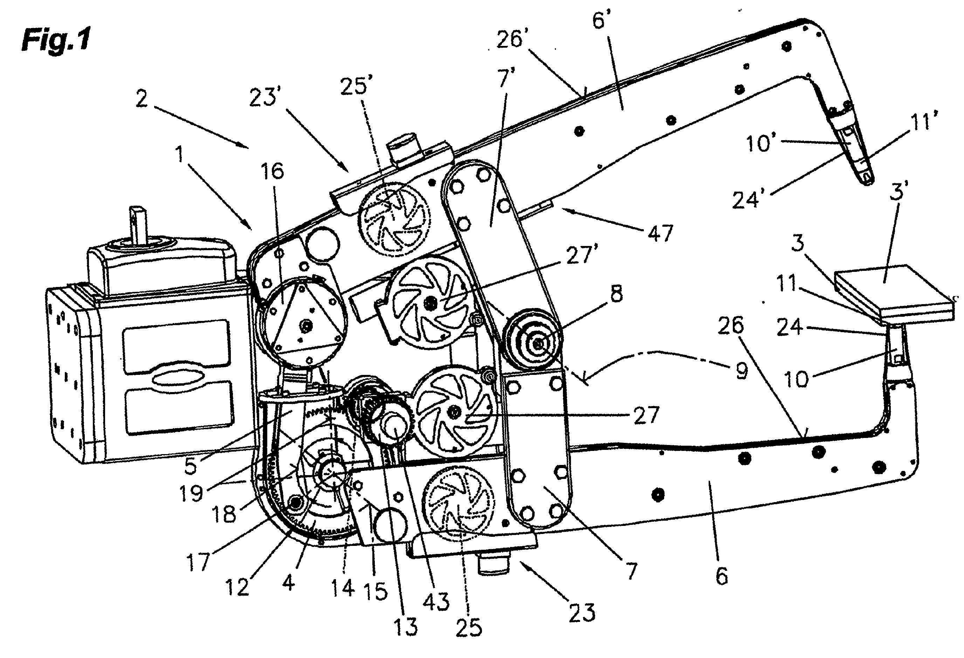

In den Fig. 1 bis 4 ist eine Punktschweißzange 2 mit einem Antrieb 1 schematisch und vereinfacht dargestellt. Die Punktschweißzange 2 ist dabei beispielsweise für Roboteranwendungen ausgebildet und wird zum Widerstandsschweißen von Werkstücken 3, 3', insbesondere Blechen, verwendet.

Der Antrieb 1 ist aus einem Stirnrad 4 und einem Pleuel 5 gebildet, wobei das Stirnrad 4 an einem Zangenarm 6 und das Pleuel 5 an der gegenüberliegenden Seite des Stirnrades 4 über ein Kompensationselement 16 mit dem weiteren Zangenarm 6' der Punktschweißzange 2 verbunden ist. An jedem Zangenarm 6, 6' ist je ein Schwenkarm 7, 7' angeordnet. Die Schwenkarme 7, 7' sind mittels eines Bolzens 8, welcher eine Drehachse 9 ausbildet, verbunden, wodurch in einfacher Art und Weise eine Lagerung der beiden Schwenkarme 7, 7' geschaffen ist und somit die beiden Zangenarme 6, 6' drehbar zueinander gelagert sind, so dass eine so genannte X-Zange gebildet wird. Die Schwenkarme 7, 7' sind in einem definierten Abstand zum Antrieb 1 und/oder zu den Elektroden 11, 11' mit den Zangenarmen 6, 6' verbunden. Der Schwenkarm 7, 7' ist also in einem definierten Abstand zu einem der beiden Enden des jeweiligen Zangenarmes 6, 6' angeordnet. An der dem Antrieb 1 gegenüberliegenden Seite des Zangenarmes 6, 6' ist ein Elektrodenhalter 10, 10' mit der Elektrode 11, 11' angeordnet. Mittels des Antriebes 1, der bevorzugt im gegenüberliegenden Endbereich der Zangenarme 6, 6' zu im anderen Endbereich der Zangenarme 6, 6' befestigten Elektroden 11, 11' angeordnet ist, wird über die Drehachse 9 eine Auf- und Zu-Bewegung, also eine Öffnung und Schließung der Zangenarme 6, 6' und somit der Elektroden 11, 11', durchgeführt. Die Drehachse 9 des Bolzens 8 ist dabei die Hauptdrehachse der Punktschweißzange 2.

Das Pleuel 5 ist außerhalb der Mitte des Stirnrades 4, insbesondere in einem definierten Abstand zu einer Mittelachse 15 des Stirnrades 4, angeordnet und über eine Lageranordnung 17 mit diesem verbunden. Die Lageranordnung 17, also die Verbindungsstelle des Pleuels 5 mit dem Stirnrad 4, führt bei Betätigung der Punktschweißzange 2, also bei einem Arbeitsvorgang, eine kurvenförmige Bewegung durch. Dadurch ist wiederum in einfacher Art und Weise eine wesentliche Reduzierung der benötigten Leistung eines das Stirnrad 4 antreibenden Motors 13 oder Motor-Getriebekombination zum Druckaufbau der Elektroden 11, 11' auf die Werkstücke 3, 3' geschaffen.

Als Verbindungsglied zwischen dem Pleuel 5 und dem Zangenarm 6' der Punktschweißzange 2 kann ein Kompensationselement 16 angeordnet sein. An einem Zangenarm 6' ist das Kompensationselement 16 und am anderen Zangenarm 6 das Stirnrad 4 angeordnet. Das Pleuel 5 ist dabei an dem Kompensationselement 16 und dem Stirnrad 4, außermittig desselben, gelagert. Das Kompensationselement 16 dient dazu, den Kraftaufbau unabhängig von den jeweiligen Blechdicken der zu verschweißenden Werkstücke 3, 3' immer im optimalen Bereich des Antriebes 1 stattfinden zu lassen. Ein Verdrehen des Stirnrades 4 erfolgt dabei bis zu einem bestimmten Bereich nahezu kraftlos, worauf anschließend das Kompensationselement 16 gesperrt wird, und somit das Stirnrad 4 nicht mehr kraftlos verdreht werden kann, wodurch ein Druckaufbau durchgeführt werden kann. Dadurch kann ein wesentlich kleinerer, leichterer und leistungsschwächerer Motor 13 für den Antrieb 1 eingesetzt werden, da der Druckaufbau immer nur im optimalen Verstellbereich stattfindet.

Um den tatsächlichen Druckaufbau, bzw. die Kraft der Elektroden 11, 11' auf das Werkstück 3 zu ermitteln, insbesondere zu überwachen, ist beispielsweise an einem Zangenarm 6, 6' und/oder am Pleuel 5 ein Mittel 47 zur Erkennung der aufgebauten Kraft angeordnet. Das Erkennungsmittel 47 kann beispielsweise als Dehnungsmessstreifen ausgebildet sein, der eine durch die Krafteinwirkung auf den Zangenarm 6' resultierende Verformung des Zangenarmes 6' bzw. des Pleuels 5 aufnimmt.

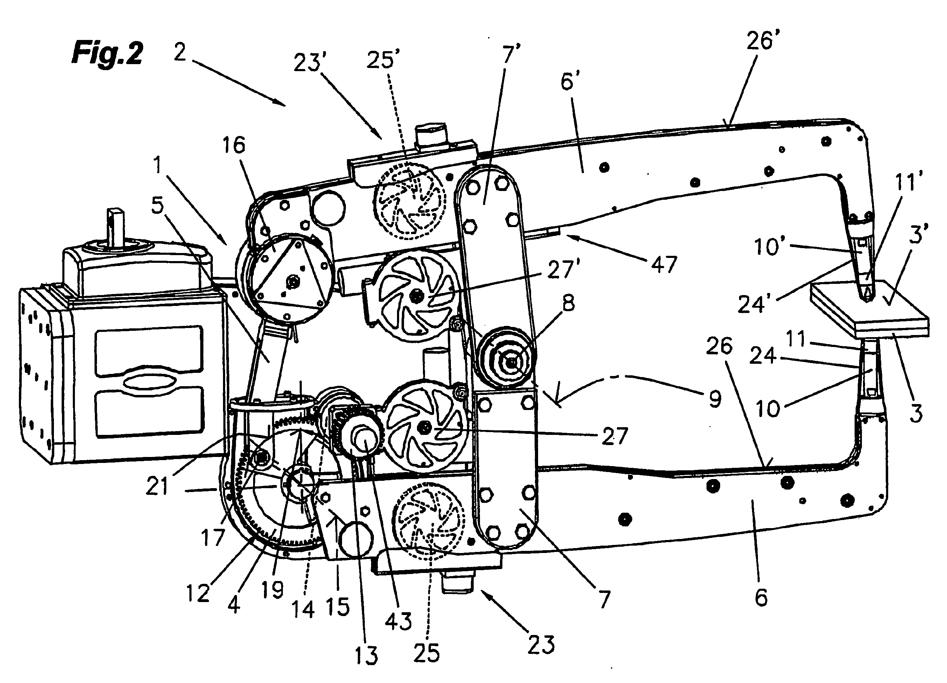

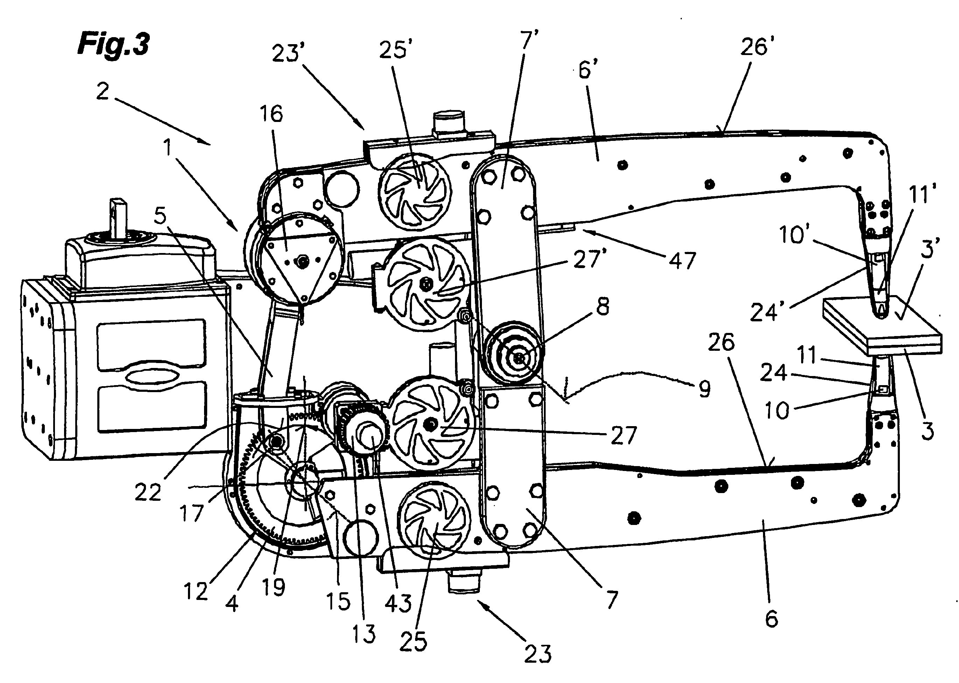

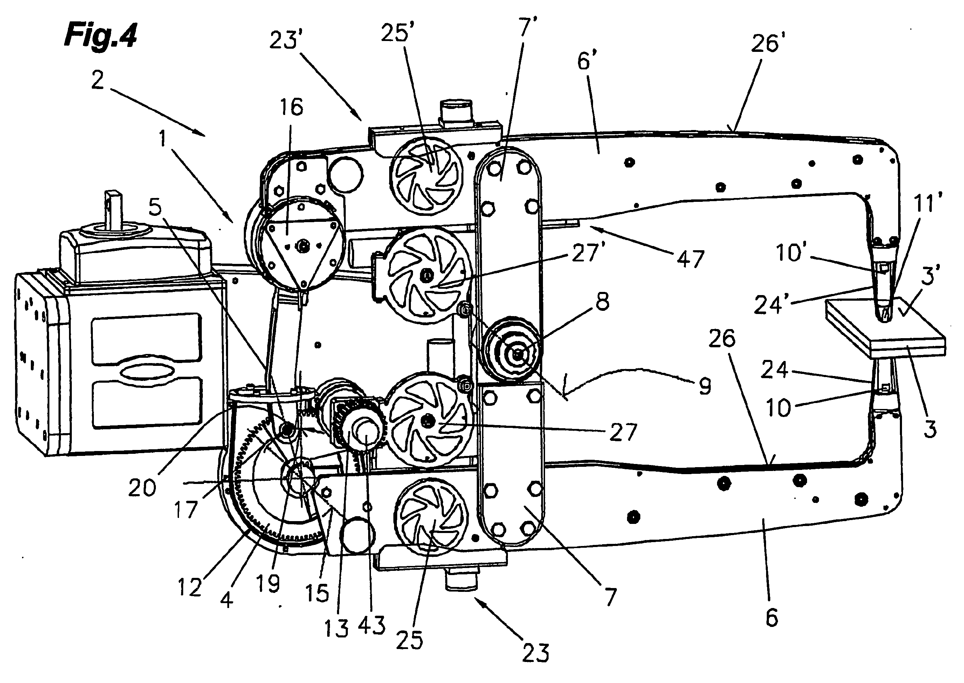

Die Fig. 1 zeigt die Punktschweißzange 2 mit dem erfindungsgemäßen Antrieb 1 in geöffnetem Zustand, also in einer Ausgangposition, während in den Fig. 2, 3 und 4 einzelne Arbeitsschritte der Punktscheißzange 2 gemäß Fig. 1 dargestellt sind. Fig. 2 zeigt die Punktschweißzange 2, wobei die Elektroden 11, 11' bis zum Kontakt mit den Werkstücken 3, 3' zusammengefahren, also in geschlossenem Zustand sind. In Fig. 3 ist das Stirnrad 4 gegenüber der Darstellung gemäß Fig. 2 weiter verdreht, jedoch verhindert das Kompensationselement 16 einen weiteren Druckaufbau der Elektroden 11, 11' auf die Werkstücke 3, 3'. Das Pleuel 5 bzw. Stirnrad 4 wird also fast kraftfrei bewegt. Fig. 4 zeigt die Punktschweißzange 2 in Arbeitsposition, also mit einem für den Punktschweißprozess notwendigen, aufgebauten Anpressdruck der Elektroden 11, 11' auf die Werkstücke 3, 3'. Das Kompensationselement 16 lässt dabei ab einem definierten Zeitpunkt bzw. ab einer definierten Lage des Stirnrades 4, bzw. der Lageranordnung 17, einen Druckaufbau zu, um den für den Punktschweißprozess notwendigen Druck der Elektroden 11, 11' auf die Werkstücke 3, 3' zu erreichen. Der Punktschweißprozess kann nun durchgeführt werden, wobei während des Punktschweißprozesses der Druck der Punktschweißzange 2 auf die Werkstücke 3, 3' aufrechterhalten wird. Nach dem Punktschweißprozess werden die Zangenarme 6, 6' wieder in die geöffnete Ausgangsposition gemäß Fig. 1 zurückbewegt.

Zum Antrieb des Stirnrades 4, weist dieses in dem dargestellten Ausführungsbeispiel eine Verzahnung 12 am Umfang auf. In diese Verzahnung 12 greift ein mit einem Getriebe und/oder dem Motor 13 gekoppeltes Zahnrad 14 ein. Das Zahnrad 14 ist dabei auf eine Welle des Getriebes und/oder des Motors 13 aufgeschoben und mit dieser verdrehfest verbunden. Der Antrieb 1 für den Zangenarm 6' setzt sich also aus dem Stirnrad 4, das daran befestigte Pleuel 5, dem Motor 13 und/oder einem Getriebe und einem daran, bzw. an einer Welle, befestigten Zahnrad 14 zusammen. Wird der Motor 13 aktiviert, bewegt das Zahnrad 14 somit das Stirnrad 4 um seine Mittelachse 15. Der Antrieb 1 benötigt im Gegensatz zum Stand der Technik einen wesentlich leistungsschwächeren Motor 13, da eine Übersetzung der Motorkraft, bzw. des Drehmomentes des Motors 13 auf das Stirnrad 4 geschaffen ist. Der Antrieb 1 ist derart aufgebaut, dass nur in einem bestimmten optimalen Verstellweg, bei dem möglichst wenig Kraft benötigt wird, ein Druckaufbau zugelassen wird.

Natürlich kann das Stirnrad 4 auch anders angetrieben werden. Beispielsweise kann der Motor 13 direkt am Stirnrad 4, also axial zur Mittelachse 15, angeordnet sein und mit dieser beispielsweise über eine Welle starr gekoppelt sein. Möglich ist auch, das Stirnrad 4 mittels eines von der Welle des Getriebes und/oder Motors 13 zu einer Welle des Stirnrades 4 verlaufenden Keilriemen anzutreiben. Der Keilriemen kann auch am Umfang des Stirnrades 4 verlaufen. Bei diesen Ausführungsvarianten wäre jedoch ein wesentlich größerer und stärkerer Motor, bzw. eine größere Motor-Getriebekombination notwendig, um den gleichen Kraftaufbau zu realisieren.

Das Kompensationselement 16 an der Verbindungsstelle des Pleuels 5 und des Zangenarmes 6' dient zum Ausgleich von unterschiedlich dicken Werkstücken 3, 3'. Das Stirnrad 4, bzw. die Lageranordnung 17, also die Verbindungsstelle zwischen dem Pleuel 5 und dem Stirnrad 4, befindet sich in Ruheposition in einem definierten Winkel 18 zu einem oberen Totpunkt 19 des Stirnrades 4, wie dies in Fig. 1 ersichtlich ist. Um einen optimalen Druckaufbau der Elektroden 11 auf die Werkstücke 3, 3' mit möglichst geringem Kraftaufwand zu erreichen, sollte der Druckaufbau idealerweise kurz vor dem oberen Totpunkt 19 entsprechend dem Winkel 22 (Fig. 3) der Lageranordnung 17 begonnen werden. Der obere Totpunkt 19 ist dabei jener Punkt, an dem die Lageranordnung 17 den höchsten Punkt am Stirnrad 4 erreicht.

Das Kompensationselement 16 steuert nunmehr den Druckaufbau derart, dass die Zangenarme 6, 6' also die Elektroden 11, 11' bis zum Kontakt mit den Werkstücken 3, 3' zueinander bewegt werden, wobei die Lageranordnung 17 des Stirnrades 4 einen Winkel 21 zum oberen Totpunkt 19 aufweist. Das Stirnrad 4 wird zwar weiter in Richtung des oberen Totpunktes 19 bewegt, jedoch erfolgt kein Druckaufbau der Elektroden 11, 11' auf die Werkstücke 3, 3'. Wenn der Winkel 22 (s. Fig. 3) erreicht ist, also die Lageranordnung 17 kurz vor dem oberen Totpunkt 19 angelangt ist, wird das Kompensationselement 16 aktiviert und der Druckaufbau erfolgt bis das Stirnrad 4 eine Position unmittelbar vor dem oberen Totpunkt 19 entsprechend dem Winkel 20 (Fig. 4) erreicht hat, so dass ein Überschwingen des oberen Totpunktes 19 sicher vermieden wird.

Um die Position des Stirnrades 4 zu detektieren, kann in unmittelbarer Nähe des Stirnrades 4 ein Sensor 43 angeordnet sein. Im dargestellten Ausführungsbeispiel ist der Sensor 43 am Motor 13 angeordnet und als Encoder ausgebildet. Der Sensor 43 erfasst dabei die Umdrehungen des Motors 13 und gibt diese an eine nicht dargestellte Steuervorrichtung der Punktschweißzange 2 weiter. Aufgrund der durch den Sensor 43 ermittelten Werte berechnet die Steuervorrichtung die Position des Stirnrades 4 bzw. die Position der Lageranordnung 17 und steuert und/oder regelt weiters das Kompensationselement 16. Somit wird eine automatische und einfache Kompensation an die unterschiedlichen Materialstärken der Werkstücke 3, 3' erreicht.

Vor Beginn des Punktschweißprozesses, also bei erstmaligem Aktivieren der Punktschweißzange 2, beispielsweise bei Arbeitsbeginn, muss die Position des Stirnrades 4 ermittelt werden. Beispielsweise kann eine Referenzstellung des Stirnrades 4 festgelegt werden. Dabei braucht das Stirnrad 4 lediglich an eine Endposition verfahren, die vom Sensor 43 erfasst wird und in Folge die Bewegung und somit die Position des Stirnrades 4 ermittelt werden. Die Steuervorrichtung steuert bzw. regelt von diesem Punkt aus die weiteren Positionen des Stirnrades 4 während des Punktschweißprozesses. Weiters ermittelt der Sensor 43 die tatsächliche Position des Stirnrades 4 zu jedem möglichen, bzw. notwendigen Zeitpunkt und übermittelt die tatsächlichen Positionen des Stirnrades 4 der Steuervorrichtung.

Die Punktschweißzange 2 kann auch Wickelvorrichtungen 23, 23' aufweisen, über welche Bänder 24, 24' über die Elektroden 11, 11' gezogen werden. Dies dient dem Schutz der Elektroden 11, 11' während des Punktschweißprozesses, wodurch in vorteilhafter Weise der Verschleiß der Elektroden 11, 11' wesentlich verringert wird. Die Bänder 24, 24' werden von Abspulrollen 25, 25' der Wickelvorrichtungen 23, 23' über Führungen 26, 26' der Zangenarme 6, 6' zu den Elektroden 11, 11' und auf der gegenüberliegenden Seite der Zangenarme 6, 6' zurück zu Aufwickelrollen 27, 27' der Wickelvorrichtungen 23, 23' geführt. Die Wickelvorrichtungen 23, 23' können am Zangenarm 6, 6' zwischen dem Antrieb 1 und dem Schwenkarm 7, 7' angeordnet sein. Die Führungen 26, 26' können in den Zangenarmen 6, 6' eingearbeitet oder durch auf den Zangenarmen 6, 6' angeordnete Durchgänge gebildet sein. Anstelle der Abspulrollen 25, 25' können auch lediglich aufgerollte Bänder 24, 24' in einer Kassette eingesetzt werden. Dadurch wird ein einfacher Tausch der Kassette bzw. der Bänder 24, 24' ermöglicht.

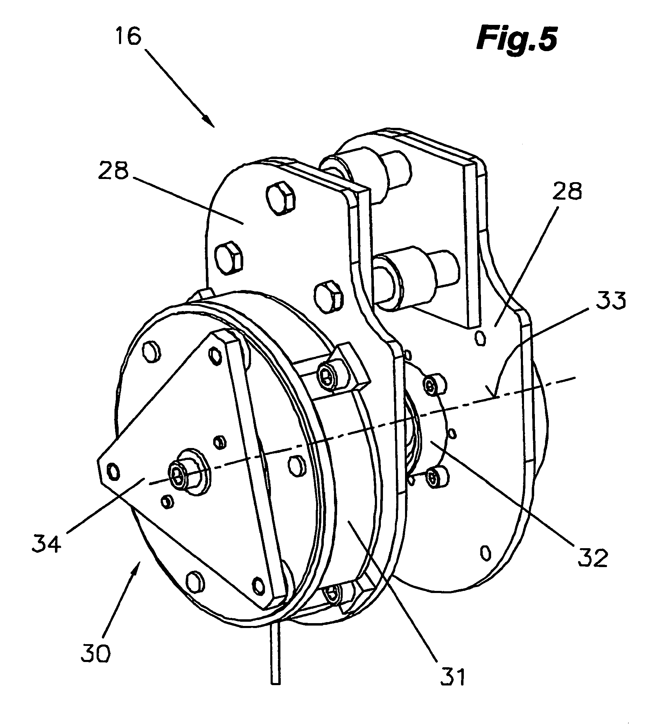

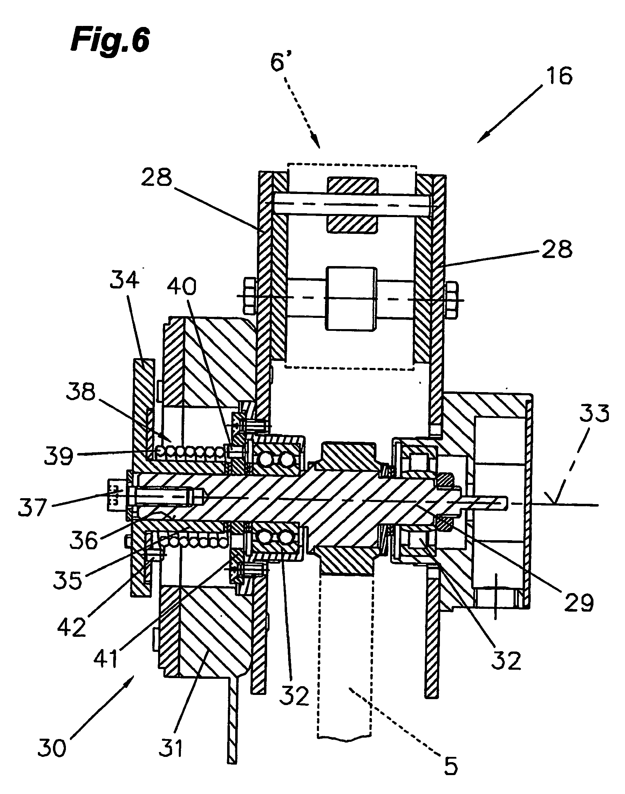

In den Fig. 5 und 6 ist das erfindungsgemäße Kompensationselement 16 dargestellt, welches aus Schildern bzw. Platten oder einem Gehäuse 28 mit einer Lagerung für eine Exzenterwelle 29, der Exzenterwelle 29 und einer Sperrvorrichtung 30 gebildet ist. Das Gehäuse 28 besteht in dem dargestellten Ausführungsbeispiel aus zwei Teilen. Die Sperrvorrichtung 30 ist in dem dargestellten Ausführungsbeispiel als Magnetbremse 31 ausgebildet. Das Kompensationselement 16 ist dabei über das Gehäuse 28 starr am Zangenarm 6' angeordnet.

Die Exzenterwelle 29 ist in zumindest einem Lager 32 beweglich um eine Achse 33 der Exzenterwelle 29 angeordnet. Weiters ist am Gehäuse 28 ein Sperrelement 34 angeordnet, welches einen zylindrischen Fortsatz 35 aufweist. Die Exzenterwelle 29 wird in eine Durchgangsöffnung 36 des zylindrischen Fortsatzes 35 eingeschoben und mittels eines Befestigungsmittels 37 mit dem Sperrelement 34 drehfest verbunden. Somit wird die Exzenterwelle 29 bei Druckbeaufschlagung verdreht und zu einem bestimmten Zeitpunkt, bzw. einer bestimmten Lage, insbesondere ab einer definierten Stellung des Stirnrades 4 bzw. der Lageranordnung 17, durch die Sperrvorrichtung 30 blockiert. Es ist auch möglich, mittels des Sensors 43 die Position des Stirnrades 4 und/oder des Motors 13 zu ermitteln, worauf bei Erreichen einer definierten Stellung des Stirnrades 4, also bei Erreichen einer definierten Position, die Sperrung des Kompensationselementes 16 erfolgt, wodurch in einfacher Art und Weise die eingangs beschriebene Wegkompensation erreicht wird.

Wenn also die Elektroden 11, 11' entsprechend Fig. 2 bis zum Kontakt mit den Werkstücken 3, 3' zueinanderbewegt werden, wird ab diesem Zeitpunkt ein Gegendruck aufgebaut, wodurch automatisch die Exzenterwelle 29 verdreht wird. Somit wird ab dem Zeitpunkt der Verdrehung der Exzenterwelle 29 der Druck der Elektroden 11, 11' auf die Werkstücke 3, 3' nicht weiter erhöht. Wenn das Stirnrad 4 eine gewünschte Position, also die Lageranordnung 17 den definierten Winkel 20 zum oberen Totpunkt 19 gemäß Fig. 4, erreicht hat, wird die Exzenterwelle 29 in seiner Drehbewegung mittels der Sperrvorrichtung 30 gesperrt und es erfolgt ein weiterer Druckaufbau der Elektroden 11, 11' auf die Werkstücke 3, 3'.

Wenn jedoch die Exzenterwelle 29 bei Beginn des Punktschweißprozesses parallel zum Pleuel 5 positioniert ist, also die exzentrische Ausbuchtung der Exzenterwelle 29 in Richtung des Pleuels 5 ausgerichtet ist, würde die Exzenterwelle 29 keine selbstständige Ausgleichsbewegung durchführen, da die Exzenterwelle 29 somit nicht über die Achse 33 verdreht werden kann. Um dies zu vermeiden und die Exzenterwelle 29 immer in einer Ausgangsposition zu halten, in der die Exzenterwelle 29 beispielsweise normal zum Pleuel 5 positioniert ist, kann ein Rückstellelement 38 angeordnet sein. Das Rückstellelement 38 kann beispielsweise als Feder 39 ausgebildet sein oder aus jedem aus dem Stand der Technik bekannten, für diese Aufgabe geeigneten, Element gebildet werden. Die Feder 39 ist dabei auf dem Fortsatz 35 angeordnet und zwischen einem ersten Bolzen 40, welcher auf einer Halteplatte 41 angeordnet ist und einem auf dem Sperrelement 34 angeordneten zweiten Bolzen 42 vorgespannt. Wenn die Exzenterwelle 29 verdreht wird, bewegt sich das Sperrelement 34 mit dieser mit und die Feder 39 wird durch den Bolzen 40 des Sperrelementes 34 weiter gespannt. Bei Druckentlastung, also nach Beendigung des Punktschweißprozesses, bzw. nach Öffnen der Punktschweißzange, drückt die Feder 39 auf das Sperrelement 34 und zwingt die Exzenterwelle 29 somit in die Ausgangsposition zurück. Dadurch ist in einfacher Art und Weise eine Rückstellung der Exzenterwelle 29 geschaffen, wodurch eine problemlose Durchführung des Punktschweißprozesses mit einer Kompensation des Weges gewährleistet ist.

Aufgrund des Kompensationselementes 16 kann ein wesentlich leistungsschwächerer Motor 13 und/oder Getriebe bzw. Übersetzung verwendet werden. Die Exzenterwelle 29 wird erst kurz vor dem oberen Totpunkt 19 des Stirnrades 4, wie eingehend beschrieben, gesperrt, da dann bis zum oberen Totpunkt 19 wesentlich weniger Energie aufgebracht werden muss, um einen definierten bzw. gewünschten Druck zu erreichen.

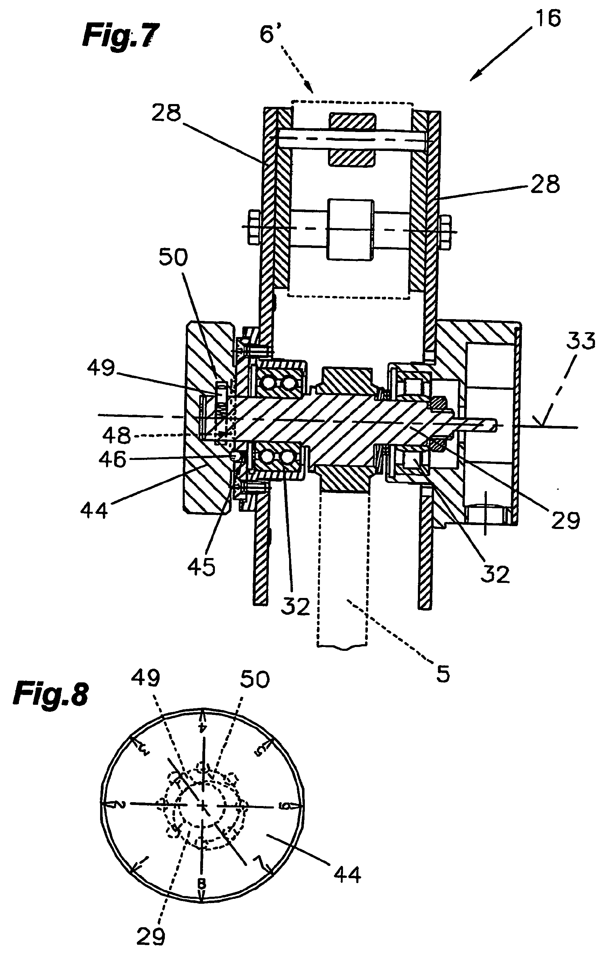

Natürlich kann die Einstellung des Anpressdruckes der Elektroden 11, 11' auf die Werkstücke 3, 3' beispielsweise mittels einer Lochscheibe 44, welche am Kompensationselement 16 angeordnet ist, manuell durchgeführt werden, wie anhand der Fig. 7 ersichtlich. Beispielsweise kann über ein Verdrehen der Lochscheibe 44 die Blechstärke der zu bearbeitenden Werkstücke 3, 3' manuell eingestellt werden. Dazu können entsprechend Fig. 8 Markierungen an der Oberfläche der Lochscheibe 44 angeordnet sein. Die Lochscheibe 44 wird entsprechend der Blechdicke verdreht. Eine auf einer Feder 45 gelagerte Kugel 46, welche am Kompensationselement 16 angeordnet ist, greift bei Erreichen der gewünschten Markierung in eine unterhalb der Markierung angeordnete Öffnung 48 ein, wodurch eine Fixierung der Lochscheibe 44 in der entsprechenden Stellung erreicht wird.

Weiters ist an der Exzenterwelle 29 ein zur Lochscheibe 44 weisender Bolzen 49 angeordnet, welcher in eine Nut 50 der Lochscheibe 44 eingreift. Die Nut 50 in der Lochscheibe 44 ist dabei so ausgebildet, dass die Exzenterwelle 29 nur soweit verdreht werden kann, bis der Bolzen 49 das Ende der Nut 50 erreicht hat. Die Exzenterwelle 29 dreht sich also ab der Berührung der Elektroden 11, 11' mit den Werkstücken 3, 3' bis zum Kontakt des Bolzens 49 mit dem Ende der Nut 50. Bei einer weiteren Drehung des Stirnrades 4 wird dann der Druckaufbau der Elektroden 11, 11' auf die Werkstücke 3, 3' gestartet. Somit ist in einfacher und kostengünstiger Art und Weise eine Einstellung der Punktschweißzange 2 ermöglicht.

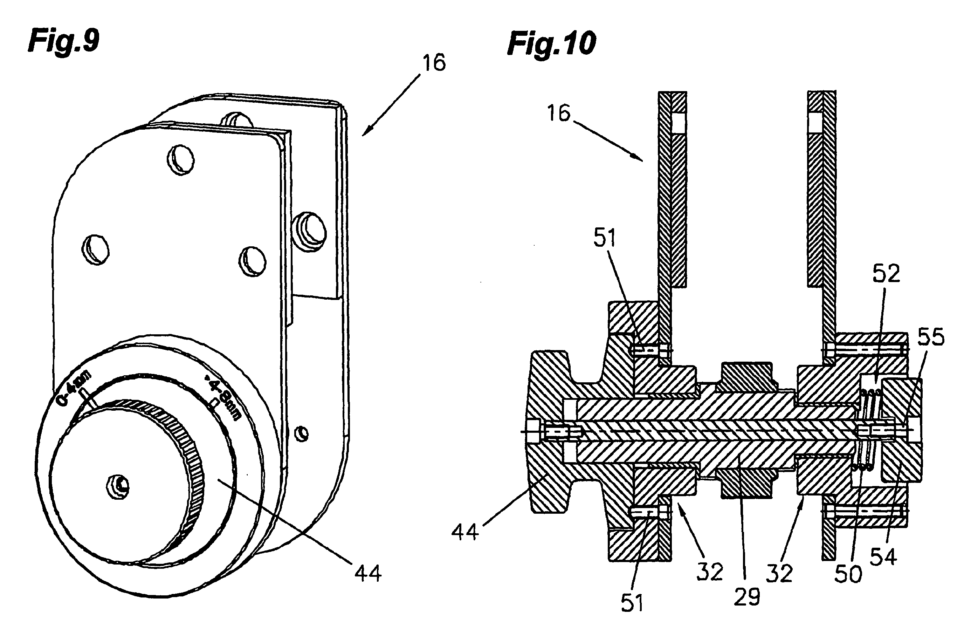

Fig. 9 und 10 zeigen eine weitere Ausführungsvariante einer manuellen Einstellmöglichkeit an der Punktschweißzange 2 für die zu bearbeitenden Werkstücke 3, 3'. Dabei ist wiederum eine Lochscheibe 44 am Kompensationselement 16 angeordnet. Die im Kompensationselement 16 angeordnete Exzenterwelle 29 ist in diesem Ausführungsbeispiel jedoch starr mit der Lochscheibe 44 verbunden. Beim Erreichen einer mechanisch festlegbaren Position erfolgt die Sperrung des Kompensationselementes 16, worauf ein weiterer Druckaufbau erfolgt.

Die Lochscheibe 44 mit der daran starr angeordneten Exzenterwelle 29 ist über ein Lager 32 drehbar am Kompensationselement 16 angeordnet. Die Lochscheibe 44 weist Markierungen mit den gängigen Stärken der zu verschweißenden Materialien auf. Somit wird durch Verdrehen der Lochscheibe 44 auf die gewünschte Materialstärke für das zu verschweißende Werkstück 3 das Kompensationselement 16 eingestellt und somit eine Weganpassung geschaffen. Bei dickeren Materialien ist der Verfahrweg der Zangenarme 6, 6' mit den daran angeordneten Elektroden 11, 11' wesentlich geringer, weshalb der Kraftaufbau auf die Werkstücke 3, 3' früher beginnen muss. Da sich das Stirnrad 4 jedoch noch nicht in Nähe des oberen Totpunktes 19 befindet, wird mehr Kraft benötigt, um den für die Punktschweißung nötigen Druck aufzubauen.

Da die Exzenterwelle 29 starr mit der Lochscheibe 44 verbunden ist, wird durch Verdrehung der Lochscheibe 44 der Zangenarm 6' mit der daran angeordneten Elektrode 11' um einen definierten Weg auf bzw. ab bewegt, also geöffnet oder geschlossen. Dadurch wird die Elektrode 11' bei dünneren Werkstücken 3, 3' bei geöffneter Punktschweißzange 2 näher zu den Werkstücken 3, 3' bewegt als bei dickeren Werkstücken 3, 3'. Somit ist eine einfache und manuelle Einstellung der Wegkompensation am Kompensationselement 16 geschaffen, da die Elektroden 11, 11' zum jeweiligen Werkstück 3, 3' immer einen definierten Weg zurücklegen und somit der Druckaufbau der Elektroden 11, 11' auf die Werkstücke 3, 3' zu einem gewünschten Zeitpunkt gestartet wird, also bei dem definierten Winkel 22 der Lageranordnung 17 zum oberen Totpunkt 19, wie schematisch in Fig. 3 dargestellt und beschrieben.

Die Lochscheibe 44 kann bei Erreichen der gewünschten Position entsprechend einer gewünschten Markierung mittels eines Bolzens 51 fixiert werden. An der Exzenterwelle 29 kann weiters gegenüber der Lochscheibe 44 eine Spannvorrichtung 52 angeordnet sein, die aus einem Spannelement 53, beispielsweise einer Feder, und einem Spannmittel 54 aufgebaut ist. Das Spannmittel 54 wird mittels einer Schraubverbindung 55 mit der Exzenterwelle 29 verbunden.

Zur Verstellung der Lochscheibe 44 muss diese vom Benutzer in Richtung des Benutzers gezogen werden, damit die Lochscheibe 44 aus den Bolzen 51 ausrasten kann. Nach Verdrehung der Lochscheibe 44 zur gewünschten Position, rastet die Lochscheibe 44 aufgrund der Spannvorrichtung 52 in den bzw. die Bolzen 51 zur Haltung der Position ein.

Durch diese Ausbildung ist eine einfache und kostengünstige Druckkompensation geschaffen, bei welcher vor der Punktschweißung vom Benutzer lediglich die Dicke der zu verschweißenden Werkstücke 3, 3' eingestellt wird.

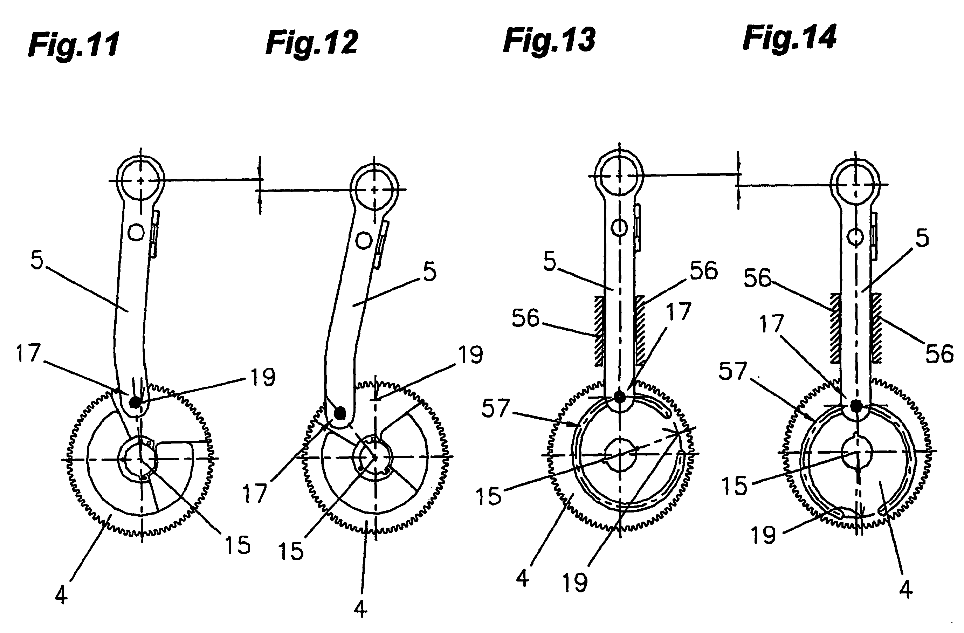

Die Fig. 11 bis 14 zeigen nunmehr verschiedene Ausführungsvarianten des Stirnrades 4 mit daran angeordnetem Pleuel 5. Dabei ist in den Fig. 11 und 12 das Pleuel 5, wie in den Fig. 1 bis 4 beschrieben, in einem definierten Abstand zur Mittelachse 15 des Stirnrades 4 angeordnet. Das Pleuel 5 ist mittels der Lageranordnung 17 mit dem Stirnrad 4 verbunden. Durch Verdrehen des Stirnrades 4 wird die Lageranordnung 17 entlang eines Radius zur Mittelachse 15, welcher sich aus dem Abstand der Lageranordnung 17 zur Mittelachse 15 ergibt, weiterbewegt und aufgrund der Befestigung mit dem Zangenarm 6' (nicht dargestellt) führt das Pleuel 5' nunmehr eine Dreh-Hubbewegung aus.

In den Fig. 13 und 14 ist eine weitere Ausführungsvariante dargestellt, bei der das Pleuel 5 entlang von Führungen 56 in Richtung des Zangenarmes 6' (nicht dargestellt) geführt wird. Das Stirnrad 4 weist eine kurvenförmige Führungsbahn 57 auf, in welche das Pleuel 5, insbesondere die Lageranordnung 17, eingreift. Die Führungsbahn 57 ist in diesem Ausführungsbeispiel kreisförmig ausgebildet und exzentrisch zur Mittelachse 15 angeordnet. Grundsätzlich muss erwähnt werden, dass auch jede andere Ausbildung bzw. Form der Führungsbahn 57, beispielsweise ellipsenförmig, möglich ist. Aufgrund der Führungsbahn 57 wird das Pleuel 5 bei Verdrehen des Stirnrades 4 entlang der Führung 56 auf und ab bewegt. Aufgrund der in den Fig. 1 bis 4 dargestellten Ausbildung der Punktschweißzange 2 werden somit die Elektroden 11, 11' in Richtung der Werkstücke 3, 3' gedrückt. Je näher das Pleuel 5 der Mittelachse 15 des Stirnrades 4 kommt, desto mehr öffnet sich die Punktschweißzange 2. Dadurch ergibt sich die Öffnungs- und Schließbewegung der Punktschweißzange 2.

Somit ist in einfacher Art und Weise ein Antrieb 1 für die Punktschweißzange 2 geschaffen. Der in den Fig. 13 und 14 dargestellte Antrieb ist dabei wiederum so ausgelegt, dass je weiter die Lageranordnung 17 sich dem oberen Totpunkt 19 nähert, desto weniger Kraft ist notwendig, um einen definierten Anpressdruck der Elektroden 11, 11' auf die Werkstücke 3, 3' zu erreichen. Somit wird auch in diesem Ausführungsbeispiel der Antrieb 1, insbesondere der Verstellweg des Stirnrades 4, derart gesteuert, dass möglichst wenig Kraft benötigt wird um den Druckaufbau zu realisieren, wodurch wiederum nur ein kleiner und leistungsschwacher und somit auch billiger Motor oder eine entsprechende Motor-Getriebekombination 13 im Vergleich zu gängigen Systemen, bzw. Antrieben, eingesetzt werden kann.

## Patentansprüche

1. Punktschweißzange (2) zum Widerstandsschweißen von Werkstücken (3, 3') mit einem Antrieb (1) zur Bewegung der Zangenarme (6, 6'), welcher Antrieb (1) aus einem Stirnrad (4) und einem außerhalb dessen Mittelachse (15) über eine Lageranordnung (17) damit verbundenen Pleuel (5) gebildet ist, wobei das Stirnrad (4) an einem Zangenarm (6) und das Pleuel (5) an der gegenüberliegenden Seite des Stirnrades (4) mit dem weiteren Zangenarm (6') verbunden ist, und wobei die Lageranordnung (17) während des Arbeitsvorganges eine kurvenförmige Bewegung durchführt, **dadurch gekennzeichnet, dass** zwischen dem Pleuel (5) und dem Zangenarm (6') ein Element (16) zur Kompensation unterschiedlicher Dicken der zu verschweißenden Werkstücke (3, 3') angeordnet ist, welches Kompensationselement (16) aus einem Gehäuse (28) mit einer beweglich in einem Lager (32) angeordneten Exzenterwelle (29) und einer Sperrvorrichtung (30) besteht.

2. Punktschweißzange (2) nach Anspruch 1, **dadurch gekennzeichnet, dass** am Umfang des Stirnrades (4) eine Verzahnung (12) angeordnet ist, in welche ein mit einem Getriebe und/oder einem Motor (13) gekoppeltes Zahnrad (14) eingreift.

3. Punktschweißzange (2) nach Anspruch 1 oder 2, **dadurch gekennzeichnet, dass** das Kompensationselement (16) an dem einen Zangenarm (6') angeordnet ist.

4. Punktschweißzange (2) nach einem der Ansprüche 1 bis 3, **dadurch gekennzeichnet, dass** an beiden Zangenarmen (6, 6') je ein Schwenkarm (7, 7') angeordnet ist und die Schwenkarme (7, 7') an der den Zangearmen (6, 6') gegenüberliegenden Seiten, beispielsweise über einen Bolzen (8) mit einer Drehachse (9), miteinander verbunden sind.

5. Punktschweißzange (2) nach Anspruch 4, **dadurch gekennzeichnet, dass** die Schwenkarme (7, 7') in einem definierten Abstand zum Antrieb (1) und/oder zu den Elektroden (11, 11') angeordnet sind.

6. Punktschweißzange (2) nach einem der Ansprüche 1 bis 5, **dadurch gekennzeichnet, dass** das Kompensationselement (16), insbesondere ein Gehäuse (28) oder Schilder des Kompensationselementes (16), starr am Zangenarm (6') angeordnet ist oder sind.

7. Punktschweißzange (2) nach einem der Ansprüche 1 bis 6, **dadurch gekennzeichnet, dass** die Sperrvorrichtung (30) so ausgebildet ist, dass ab einer definierten Verdrehung der Exzenterwelle (29) diese verriegelt wird.

8. Punktschweißzange (2) nach einem der Ansprüche 1 bis 7, **dadurch gekennzeichnet, dass** am Gehäuse (28) des Kompensationselementes (16) eine Sperrvorrichtung (34) angeordnet ist, welche einen zylindrischen Fortsatz (35) aufweist, wobei die Exzenterwelle (29) in eine Durchgangsöffnung (36) des zylindrischen Fortsatzes (35) eingeschoben ist.

9. Punktschweißzange (2) nach Anspruch 8, **dadurch gekennzeichnet, dass** an der Exzenterwelle (29) ein Befestigungsmittel (37) angeordnet ist, welches die Exzenterwelle (29) mit der Sperrvorrichtung (34) verbindet.

10. Punktschweißzange (2) nach Anspruch 8 oder 9, **dadurch gekennzeichnet, dass** am Fortsatz (35) ein Rückstellelement (38) angeordnet ist.

11. Punktschweißzange (2) nach Anspruch 10, **dadurch gekennzeichnet, dass** das Rückstellelement (38) als Feder (39) ausgebildet ist.

12. Punktschweißzange (2) nach Anspruch 10 oder 11, **dadurch gekennzeichnet, dass** das Rückstellelement (38) zwischen zwei Halteelementen, insbesondere Bolzen (40, 42), vorgespannt ist.

13. Punktschweißzange (2) nach einem der Ansprüche 1 bis 12, **dadurch gekennzeichnet, dass** das Pleuel (5) des Antriebes (1) an der Exzenterwelle (29) gelagert ist.

14. Punktschweißzange (2) nach einem der Ansprüche 1 bis 13, **dadurch gekennzeichnet, dass** die Sperrvorrichtung (30) als Magnetbremse (31) ausgebildet ist.

15. Punktschweißzange (2) nach einem der Ansprüche 1 bis 14, **dadurch gekennzeichnet, dass** das Kompensationselement (16) manuell einstellbar ist.

16. Verfahren zum Einstellen des Druckes einer Punktschweißzange, wobei zumindest eine Elektrode (11') eines Zangenarmes (6') in Richtung der zu verbindenden Werkstücke (3, 3') mittels eines Antriebes (1) bewegt wird, wobei der Antrieb (1) über ein Stirnrad (4) und ein daran gelagertes Pleuel (5) den Zangenarm (6') mit der Elektrode (11') betätigt, und nach dem Kontaktieren der Elektrode (11') mit den Werkstücken (3, 3') durch weiteres Betätigen des Antriebs (1) ein Druck auf die Werkstücke (3, 3') über den Zangenarm (6') und der daran angeordneten Elektrode (11') aufgebaut wird, wobei über einen Sensor (43) dieser Druck ermittelt wird und die Daten des Sensors (43) an eine Steuervorrichtung übermittelt werden, wobei bei Erreichen eines vorbestimmten Druckwertes der Antrieb (1) durch die Steuervorrichtung so geregelt wird, dass der Druck aufrecht erhalten wird, worauf die Punktschweißung durchgeführt wird, und nach der Punktschweißung die Elektrode (11') zurückbewegt wird, **dadurch gekennzeichnet, dass** während der Bewegung der Elektrode (11') in Richtung der Werkstücke (3, 3') über ein zwischen dem Pleuel (5) und dem Zangenarm (6) angeordnetes Kompensationselement (16) eine Druck- bzw. Wegkompensation durchgeführt wird, indem der Sensor (43) eine Position des Stirnrades (4) und/oder Motors (13) ermittelt, und bei Erreichen einer definierten Position, die bevorzugt nahe eines oberen Totpunktes (19) des Stirnrades (4) liegt, das Kompensationselement (16) gesperrt wird und somit ein Druckaufbau der Elektrode (11') auf die Werkstücke (3, 3') durchgeführt wird.

17. Verfahren nach Anspruch 16, **dadurch gekennzeichnet, dass** das Stirnrad (4) und/oder der Motor (13) bei Erreichen eines definierten Druckes der Elektrode (11') auf die Werkstücke (3, 3') diese Position beibehält, wodurch der Anpressdruck der Elektrode (11') auf die Werkstücke (3, 3') während des Punktschweißprozesses aufrecht erhalten wird.

18. Verfahren nach Anspruch 16 oder 17, **dadurch gekennzeichnet, dass** ein Sensor (43) eine Position des Stirnrades (4) und/oder Motors (13) zur Sperrung des Kompensationselementes (16) ermittelt wird.

19. Verfahren nach einem der Ansprüche 16 bis 18, **dadurch gekennzeichnet, dass** die Druck- bzw. Wegkompensation durch ein mechanisch aufgebautes Kompensationselement (16) erfolgt, indem bei Erreichen einer mechanisch festlegbaren Position das Kompensationselement (16) für einen weiteren Druckaufbau gesperrt wird.

20. Verfahren nach einem der Ansprüche 16 bis 19, **dadurch gekennzeichnet, dass** vor Beginn des Punktschweißvorganges die Punktschweißzange (2) geöffnet wird und mittels des Sensors (43) die Referenzposition des Stirnrades (4) ermittelt wird.

21. Verfahren nach einem der Ansprüche 16 bis 20, **dadurch gekennzeichnet, dass** die Elektroden (11, 11') zueinander bewegt werden, bis sie die Werkstücke (3, 3') kontaktieren, danach das Stirnrad (4) weiter verdreht wird, jedoch der Druck der Elektroden (11, 11') auf die Werkstücke (3, 3') über das Kompensationselement (16) nicht weiter aufgebaut wird, indem eine im Kompensationselement (16) gelagerte Exzenterwelle (29) bei Kontakt mit den Werkstücken (3, 3') über eine Achse (33) verdreht wird, wonach bei Erreichen der definierten Position des Stirnrades (4) die Exzenterwelle (29) in ihrer Drehrichtung gesperrt wird, so dass ein weiterer Druckaufbau der Elektroden (11, 11') auf die Werkstücke (3, 3') durchgeführt wird.

22. Verfahren nach einem der Ansprüche 16 bis 21, **dadurch gekennzeichnet, dass** der aufgebaute Druck durch ein am Pleuel (5) und/oder am Zangenarm (6') angeordnetes Mittel (47) zur Erkennung des Drucks ermittelt wird.

23. Verfahren nach Anspruch 22, **dadurch gekennzeichnet, dass** der Druck über die Deformierung des Pleuels (5) und/oder des Zangenarms (6') ermittelt wird.

## Claims

1. A spot welding gun (2) for the resistance-welding of workpieces (3, 3'), including a drive (1) for moving the welding gun arms (6, 6'), which drive (1) is formed by a spur wheel (4) and a connecting rod (5) connected with the spur wheel (4) outside the central axis (15) of the same via a bearing assembly (17), wherein the spur wheel (4) is connected to a gun arm (6) and the connecting rod (5) is connected with the other gun arm (6') on the opposite side of the spur wheel (4), and wherein the bearing assembly (17) performs a curvilinear movement during operation, **characterized in that** an element (16) is arranged between the connecting rod (5) and the gun arm (6') to compensate for different thicknesses of the workpieces (3, 3') to be welded, which compensation element (16) is comprised of a casing (28) including an eccentric shaft (29) movably mounted in a bearing (32), as well as a blocking means (30).

2. A spot welding gun (2) according to claim 1, **characterized in that** a toothing (12) is provided about the circumference of the spur wheel (4), which is engaged by a toothed wheel (14) coupled to a gear and/or a motor (13).

3. A spot welding gun (2) according to claim 1 or 2, **characterized in that** the compensation element (16) is arranged on one (6') of the gun arms.

4. A spot welding gun (2) according to any one of claims 1 to 3, **characterized in that** a pivot arm (7, 7') is each arranged on the two gun arms (6, 6') and the pivot arms (7, 7') are connected with each other on the sides opposite the gun arms (6, 6'), for instance by a pin (8) having an axis of rotation (9).

5. A spot welding gun (2) according to claim 4, **characterized in that** the pivot arms (7, 7') are each arranged at a defined distance relative to the drive (1) and/or the electrodes (11, 11').

6. A spot welding gun (2) according to any one of claims 1 to 5, **characterized in that** the compensation element (16), in particular a casing (28) or shields of the compensation element (16), is/are rigidly arranged on the gun arm (6').

7. A spot welding gun (2) according to any one of claims 1 to 6, **characterized in that** the blocking means (30) is designed to block the eccentric shaft (29), beginning from a defined rotation of the same.

8. A spot welding gun (2) according to any one of claims 1 to 7, **characterized in that** a blocking means (34) is arranged on the casing (28) of the compensation element (16), which blocking means comprises a cylindrical projection (35), wherein the eccentric shaft (29) is inserted in a passage opening (36) of the cylindrical projection (35).

9. A spot welding gun (2) according to claim 8, **characterized in that** a fixing means (37) is arranged on the eccentric shaft (29) to connect the eccentric shaft (29) with the blocking means (34).

10. A spot welding gun (2) according to claim 8 or 9, **characterized in that** a readjusting element (38) is arranged on the projection (35).

11. A spot welding gun (2) according to claim 10, **characterized in that** the readjusting element (38) is designed as a spring (39).

12. A spot welding gun (2) according to according to claim 10 or 11, **characterized in that** the readjusting element (38) is biassed between two holding elements, in particular pins (40, 42).

13. A spot welding gun (2) according to any one of claims 1 to 12, **characterized in that** the connecting rod (5) of the drive (1) is mounted on the eccentric shaft (29).

14. A spot welding gun (2) according to any one of claims 1 to 13, **characterized in that** the blocking means (30) is designed as a magnetic brake.

15. A spot welding gun (2) according to any one of claims 1 to 14, **characterized in that** the compensation element (16) is manually adjustable.

16. A method for adjusting the pressure of a spot welding gun, wherein at least one electrode (11') of a welding gun arm (6') is moved by a drive (1) in the direction of the workpieces (3, 3') to be joined, wherein the drive (1), via a spur wheel (4) and a connecting rod (5) mounted on the same, actuates the gun arm (6') carrying the electrode (11') and, after the electrode (11') has contacted the workpieces (3, 3'), a pressure is built up on the workpieces (3, 3'), by further actuating the drive (1), via the gun arm (6') and the electrode (11') arranged on the same, said pressure being detected by a sensor (43) and the data of the sensor (43) being transmitted to a control device, whereby, upon attainment of a predetermined pressure value, the drive (1) is controlled by the control device in a manner as to maintain said pressure, whereupon spot welding is carried out and the electrode (11') is moved back after spot welding has been completed, **characterized in that**, during the movement of the electrode (11') in the direction of the workpieces (3, 3'), a pressure and/or path compensation is effected via a compensation element (16) arranged between the connecting rod (5) and the gun arm (6), by the sensor (43) detecting a position of the spur wheel (4) and/or motor (13) and the compensation element (16) being blocked when reaching a defined position located preferably near an upper dead center (19) of the spur wheel (4), thus effecting a pressure build-up of the electrode (11') on the workpieces (3, 3').

17. A method according to claim 16, **characterized in that** the spur wheel (4) and/or the motor (13), when reaching a defined pressure of the electrode (11') on the workpieces (3, 3'), keep their positions, thus causing the application pressure of the electrode (11') on the workpieces (3, 3') to be maintained during the spot welding process.

18. A method according to claims 16 or 17, **characterized in that** a sensor (43) detects a position of the spur wheel (4) and/or motor (13) in order to block the compensation element (16).

19. A method according to any one of claims 16 to 18, **characterized in that** the pressure or path compensation is effected using a mechanically constructed compensation element (16), by blocking the compensation element (16) for any further pressure build-up when reaching a mechanically fixable position.

20. A method according to any one of claims 16 to 19, **characterized in that**, prior to the beginning of the spot welding procedure, the spot welding gun (2) is opened and the reference position of the spur wheel (4) is determined by the aid of the sensor (43).

21. A method according to any one of claims 16 to 20, **characterized in that** the electrodes (11,' 11') are moved towards each other until contacting the workpieces (3, 3'), the spur wheel (4) is then further rotated, yet while not further building up the pressure of the electrodes (11, 11') on the workpieces (3, 3') via the compensation element (16) by an eccentric shaft (29) mounted in the compensation element (16) being rotated about an axis (33) upon contact with the workpieces (3, 3'), whereupon the eccentric shaft (29) is blocked in its direction of rotation when reaching the defined position of the spur wheel (4) such that a further pressure build-up of the electrodes (11, 11') on the workpieces (3, 3') is effected.

22. A method according to any one of claims 16 to 21, **characterized in that** the built-up pressure is detected by a pressure recognition means (47) arranged on the connecting rod (5) and/or on the gun arm (6').

23. A method according to claim 22, **characterized in that** said pressure is detected via the deformation of the connecting rod (5) and/or the gun arm (6').

## Revendications

1. Pince à souder par points (2) pour le soudage par résistance de pièces (3, 3'), comprenant un entraînement (1) pour déplacer les branches (6, 6') de la pince, lequel entraînement (1) est formé d'une roue frontale (4) et d'une bielle (5) raccordée à celle-ci en dehors de son axe central (15) via un agencement de palier (17), dans laquelle la roue frontale (4) est raccordée à une branche (6) de la pince et la bielle (5) est raccordée, du côté opposé de la roue frontale (4), à l'autre branche (6') de la pince, et dans laquelle l'agencement de palier (17) effectue pendant l'opération de travail un mouvement courbe, **caractérisée en ce que** l'on dispose entre la bielle (5) et la branche de pince (6') un élément (16) destiné à compenser différentes épaisseurs des pièces (3, 3') à souder, lequel élément de compensation (16) est constitué d'un boîtier (28) avec un arbre à excentrique (29) agencé de manière mobile dans un palier (32) et d'un dispositif de blocage (30).

2. Pince à souder par points (2) selon la revendication 1, **caractérisée en ce qu'**il est agencé sur le pourtour de la roue frontale (4) une denture (12), dans laquelle s'engage une roue dentée (14) couplée à une transmission et/ou à un moteur (13).

3. Pince à souder par points (2) selon la revendication 1 ou 2, **caractérisée en ce que** l'élément de compensation (16) est disposé sur l'une des branches (6') de la pince.

4. Pince à souder par points (2) selon l'une quelconque des revendications 1 à 3, **caractérisée en ce qu'**un bras pivotant (7, 7') est respectivement disposé sur chaque branche de pince (6, 6') et les bras pivotants (7, 7') sont raccordés l'un à l'autre sur les côtés opposés aux branches (6, 6') de la pince, notamment par le biais d'un boulon (8) avec un axe de rotation (9).

5. Pince à souder par points (2) selon la revendication 4, **caractérisée en ce que** les bras pivotants (7, 7') sont disposés à une distance définie de l'entraînement (1) et/ou des électrodes (11, 11').

6. Pince à souder par points (2) selon l'une quelconque des revendications 1 à 5, **caractérisée en ce que** l'élément de compensation (16), en particulier un boîtier (28) ou des plaques de l'élément de compensation (16), est ou sont disposés de manière rigide sur la branche (6') de la pince.

7. Pince à souder par points (2) selon l'une quelconque des revendications 1 à 6, **caractérisée en ce que** le dispositif de blocage (30) est formé de sorte que celui-ci soit verrouillé à partir d'une rotation définie de l'arbre à excentrique (29).

8. Pince à souder par points (2) selon l'une quelconque des revendications 1 à 7, **caractérisée en ce qu'**il est aménagé sur le boîtier (28) de l'élément de compensation (16) un dispositif de blocage (34) qui présente un prolongement cylindrique (35), l'arbre à excentrique (29) étant inséré dans une ouverture de passage (36) du prolongement cylindrique (35).

9. Pince à souder par points (2) selon la revendication 8, **caractérisée en ce qu'**il est aménagé sur l'arbre à excentrique (29) un moyen de fixation (37) qui raccorde l'arbre à excentrique (29) au dispositif de blocage (34).

10. Pince à souder par points (2) selon la revendication 8 ou 9, **caractérisée en ce qu'**un élément de rappel (38) est disposé sur le prolongement (35).

11. Pince à souder par points (2) selon la revendication 10, **caractérisée en ce que** l'élément de rappel (38) est en forme de ressort (39).

12. Pince à souder par points (2) selon la revendication 10 ou 11, **caractérisée en ce que** l'élément de rappel (38) est précontraint entre deux éléments de retenue, en particulier des boulons (40, 42).

13. Pince à souder par points (2) selon l'une quelconque des revendications 1 à 12, **caractérisée en ce que** la bielle (5) de l'entraînement (1) est montée sur l'arbre à excentrique (29).

14. Pince à souder par points (2) selon l'une quelconque des revendications 1 à 13, **caractérisée en ce que** le dispositif de blocage (30) est en forme de frein magnétique (31).

15. Pince à souder par points (2) selon l'une quelconque des revendications 1 à 14, **caractérisée en ce que** l'élément de compensation (16) est réglable manuellement.

16. Procédé de réglage de la pression d'une pince à souder par points, dans lequel au moins une électrode (11') d'une branche (6') de la pince est déplacée en direction des pièces (3, 3') à raccorder au moyen d'un entraînement (1), dans lequel l'entraînement (1) actionne la branche (6') de la pince avec l'électrode (11') par le biais d'une roue frontale (4) et d'une bielle (5) qui y est montée et, après la mise en contact de l'électrode (11') avec les pièces (3, 3'), par un autre actionnement de l'entraînement (1), une pression est appliquée sur, les pièces (3, 3') par la branche (6') de la pince et l'électrode (11') qui y est disposée, dans lequel cette pression est déterminée par un capteur (43) et les données du capteur (43) sont transmises à un dispositif de commande, dans lequel, en atteignant une valeur de pression prédéterminée, l'entraînement (1) est réglé par le dispositif de commande de manière à maintenir la pression, après quoi le soudage par points est effectué, et l'électrode (11') est déplacée en arrière après le soudage par points, **caractérisé en ce que**, pendant le mouvement de l'électrode (11') en direction des pièces (3, 3'), par le biais d'un élément de compensation (16) disposé entre la bielle (5) et la branche (6) de la pince, une compensation de pression ou de course est réalisée en déterminant, par le capteur (43), une position de la roue frontale (4) et/ou du moteur (13) et, en atteignant une position définie, qui se situe de préférence à proximité d'un point mort haut (19) de la roue frontale (4), l'élément de compensation (16) est bloqué et un établissement de pression de l'électrode (11') sur les pièces (3, 3') est donc réalisé.

17. Procédé selon la revendication 16, **caractérisé en ce que**, lorsque une pression définie de l'électrode (11') sur les pièces (3, 3') est atteinte, la roue frontale (4) et/ou le moteur (13) conserve(nt) cette position, ce qui permet de maintenir la pression appliquée de l'électrode (11') sur les pièces (3, 3') pendant le processus de soudage par points.

18. Procédé selon la revendication 16 ou 17, **caractérisé en ce qu'**un capteur (43) détermine une position de la roue frontale (4) et/ou du moteur (13) pour commander l'élément de compensation (16).

19. Procédé selon l'une quelconque des revendications 16 à 18, **caractérisé en ce que** la compensation de pression ou de course se fait par un élément de compensation (16) à structure mécanique en bloquant l'élément de compensation (16) pour un autre établissement de pression lorsqu'une position déterminable mécaniquement est atteinte.

20. Procédé selon l'une quelconque des revendications 16 à 19, **caractérisé en ce qu'**avant le début de l'opération de soudage par points, la pince à souder par points (2) est ouverte et la position de référence de la roue frontale (4) est déterminée au moyen du capteur (43).

21. Procédé selon l'une quelconque des revendications 16 à 20, **caractérisé en ce que** les électrodes (11, 11') sont déplacées l'une par rapport à l'autre jusqu'à venir en contact avec les pièces (3, 3'), après quoi la roue frontale (4) est encore soumise à une rotation, mais l'établissement de la pression des électrodes (11, 11') sur les pièces (3, 3') par l'élément de compensation (16) n'est pas poursuivi en faisant tourner sur un axe (33) un arbre à excentrique (29) monté dans l'élément de compensation (16) lors de la mise en contact avec les pièces (3, 3'), après quoi, lorsque la position définie de la roue frontale (4) est atteinte, l'arbre à excentrique (29) est bloqué dans son sens de rotation de manière à réaliser un autre établissement de pression des électrodes (11, 11') sur les pièces (3, 3').

22. Procédé selon l'une quelconque des revendications 16 à 21, **caractérisé en ce que** la pression établie est déterminée par un moyen (47) disposé sur la bielle (5) et/ou sur la branche (6') de pince pour détecter la pression.

23. Procédé selon la revendication 22, **caractérisé en ce que** la pression est déterminée par la déformation de la bielle (5) et/ou de la branche (6') de la pince.
